# EUROPEAN PATENT SPECIFICATION

(11) **EP 4 006 720 B1**
(45) Date of publication and mention of the grant of the patent: **20.08.2025**
(21) Application number: 21199160.9
(22) Date of filing: 27.09.2021
(51) Int. Cl.: G06F 9/4401, G06F 21/10, G06F 21/57

(54) **INFORMATION PROCESSING APPARATUS AND BIOS MANAGEMENT METHOD**
INFORMATIONSVERARBEITUNGSVORRICHTUNG UND BIOSYSTEM-VERWALTUNGSVERFAHREN
APPAREIL DE TRAITEMENT D'INFORMATIONS, PROCÉDÉ DE GESTION DE BIOS

(30) Priority: 26.11.2020 JP 2020196115
(43) Date of publication of application: 01.06.2022
(73) Proprietor: Lenovo (Singapore) Pte. Ltd., New Tech Park 556741 (SG)
(72) Inventor: HORINOUCHI, Koudai, Kanagawa, 2200012 (JP); KASAMATSU, Eitaroh, Kanagawa, 2200012 (JP); HAGIWARA, Mikio, Kanagawa, 2200012 (JP); MA, Ke, Kanagawa, 2200012 (JP)
(74) Representative: Openshaw & Co.

(56) References cited:
- WO-A1-2014/062979
- US-A1- 2004 128 395
- US-A1- 2020 092 679
- US-B2- 10 664 573

## Description

### Field of the Invention

The present invention relates to an information processing apparatus and a BIOS management method.

### Background of the Invention

A BIOS (Basic Input/Output System) is a program executed on an information processing apparatus such as a personal computer (PC) not only to initialize the information processing apparatus and boot an OS (Operating System), but also to perform basic input/output control on peripheral equipment and devices connected to the information processing apparatus. The information processing apparatus can change the BIOS to add or change a function(s).

[Patent Document 1] Japanese Unexamined Patent Application Publication No. 2016-122268.

US 10,664,573 B2 describes a set of Unified Extensible Firmware Interface (UEFI) firmware modules to provide a plurality of basic input/output system (BIOS) services for a computing platform, that includes booting of the computing platform at power on or reset, and cooperation with a trusted execution environment to facilitate protected access to an expiration date as an authenticated variable, and wherein the boot process may be stopped.

US 2020/092,679 A1 describes a method for remote time-based control of product functionality, comprising: receiving, within a product and from a remote server, an expiration date for a feature of the product; storing the expiration date within a memory of the product; and controlling the feature within the product based upon the expiration date and a current time.

WO 2014/062,979 A1 describes storing and accessing licensing information in operating system-independent storage; and a method comprising: receiving a request to perform an action at a local device; determining that the requested action requires a license; and requesting data from an operating system-independent storage on the local device to determine if a valid license for the requested action exists, wherein the operating system- independent storage is resident in a chipset associated with a processor.

US 2004/128,395 A1 describes a license management method and a license management system that perform the license management of software installed on a user terminal using a private key and a public key in the public key cryptosystem.

### Summary of the Invention

The invention is defined by the appended claims. Claim 1 defines an information processing apparatus and claim 9 defines a BIOS management method. In the following, any method and/or apparatus referred to as embodiments but nevertheless do not fall within the scope of the appended claims are to be understood as examples helpful in understanding the invention.

Incidentally, a conventional information processing apparatus may be requested for a unique function from a customer. The information processing apparatus has dealt with such a case by preparing a BIOS dedicated to the customer or using a BIOS hidden function. However, it has been difficult for the conventional information processing apparatus to set an expiration date of the BIOS.

The present invention has been made to solve the above problem and it is an object thereof to provide an information processing apparatus and a BIOS management method capable of setting the expiration date to customize the BIOS.

In order to solve the above problem, one aspect of the present invention provides an information processing apparatus including: a BIOS storage unit which stores a BIOS (Basic Input Output System) program; a management information storage unit which stores management information in which each BIOS function, an expiration date of the BIOS function, and a state of the BIOS function are associated with one another; a BIOS change unit which stores, in the BIOS storage unit, BIOS information received from a server apparatus to implement the BIOS function according to a request from a customer so as to enable the BIOS function, and stores management information in the management information storage unit; and a BIOS management unit which, when a date acquired from a clock unit has passed the expiration date stored in the management information storage unit, disables the BIOS function corresponding to the expiration date and changes, to an invalid state, the state of the BIOS function corresponding to the disabled BIOS function in the management information.

The above information processing apparatus according to the one aspect of the present invention may also be such that the BIOS change unit acquires, together with acquired data including the BIOS information, authentication data generated based on the acquired data and secret key data corresponding to the information processing apparatus and received from the server apparatus, determines validity of the acquired data based on public key data corresponding to the secret key data and the authentication data, and when the acquired data is valid, stores the BIOS information in the BIOS storage unit to enable the BIOS function.

The above information processing apparatus according to the one aspect of the present invention may further be such that the acquired data includes apparatus identification information for identifying the information processing apparatus and activation key data to enable the BIOS function, and when the apparatus identification information included in the acquired data matches the apparatus identification information of the information processing apparatus, and when the activation key data transmitted to the customer in a way different from the acquired data and input by the customer matches the activation key data included in the acquired data, the BIOS change unit stores the BIOS information in the BIOS storage unit to enable the BIOS function.

Further, the above information processing apparatus according to the one aspect of the present invention may be such that the BIOS management unit determines whether or not the date acquired from the clock unit has passed the expiration date stored in the management information storage unit each time the information processing apparatus starts up, and when the date has passed the expiration date, the BIOS management unit disables the BIOS function corresponding to the expiration date and changes, to the invalid state, the state of the BIOS function corresponding to the disabled BIOS function in the management information.

Further, the above information processing apparatus according to the one aspect of the present invention may be such that the BIOS management unit determines whether or not the date acquired from the clock unit has passed the expiration date stored in the management information storage unit regularly in such a state that an OS (Operating System) is running, and when the date has passed the expiration date, the BIOS management unit disables the BIOS function corresponding to the expiration date and changes, to the invalid state, the state of the BIOS function corresponding to the disabled BIOS function in the management information the next time the information processing apparatus starts up.

Further, the above information processing apparatus according to the one aspect of the present invention may be such that when there is any BIOS function the expiration date of which is valid in the management information storage unit, the BIOS management unit prohibits any change in the date of the clock unit by a BIOS setup menu.

Further, the above information processing apparatus according to the one aspect of the present invention may be such that when the date of the clock unit is changed due to a loss of power from a battery, or when a time of the clock unit is changed over 24 hours by the OS (Operating System), the BIOS management unit disables the BIOS function and changes, to the invalid state, the state of the BIOS function corresponding to the disabled BIOS function in the management information.

Further, the above information processing apparatus according to the one aspect of the present invention may be such that when there is a change of less than 24 hours in the time of the clock unit by the OS, the BIOS management unit counts the change, and when the number of change counts becomes threshold times or more in a past predetermined period, the BIOS management unit disables the BIOS function and changes, to the invalid state, the state of the BIOS function corresponding to the disabled BIOS function in the management information.

Further, the above information processing apparatus according to the one aspect of the present invention may be such that when updating the expiration date, the BIOS change unit acquires update information for updating the expiration date corresponding to the BIOS function, and based on the update information, enables the BIOS function and updates the expiration date corresponding to the BIOS function in the management information storage unit.

Further, the above information processing apparatus according to the one aspect of the present invention may be such that the BIOS change unit and the BIOS management unit are configured as part of a BIOS.

Another aspect of the present invention provides a BIOS management method of an information processing apparatus including a BIOS storage unit which stores a BIOS (Basic Input Output System) program and a management information storage unit which stores management information in which each BIOS function, an expiration date of the BIOS function, and a state of the BIOS function are associated with one another, the BIOS management method including: a step of causing a BIOS change unit to store, in the BIOS storage unit, BIOS information received from a server apparatus to implement a BIOS function according to a request from a customer so as to enable the BIOS function, and to store management information in the management information storage unit; and a step of causing a BIOS management unit to disable the BIOS function corresponding to an expiration date when a date acquired from a clock unit has passed the expiration date stored in the management information storage unit, and to change, to an invalid state, the state of the BIOS function corresponding to the disabled BIOS function in the management information.

The above-described aspects of the present invention can set an expiration date to customize a BIOS.

### Brief Description of the Drawings

FIG. 1 is a schematic diagram illustrating a configuration example of a BIOS purchasing system according to one embodiment.
FIG. 2 is a block diagram illustrating an example of the main hardware configuration of a laptop PC according to the present embodiment.
FIG. 3 is a block diagram illustrating an example of the functional configuration of the BIOS purchasing system according to the present embodiment.
FIG. 4 is a table illustrating a data example of a customer information storage unit of the present embodiment.
FIG. 5 is a table illustrating a data example of an apparatus information storage unit of the present embodiment.
FIG. 6 is a table illustrating a data example of a deadline information storage unit of the present embodiment.
FIG. 7 is a table illustrating a data example of a management information storage unit of the present embodiment.
FIG. 8 is a chart illustrating an example of purchase processing of a BIOS function by the BIOS purchasing system of the present embodiment.
FIG. 9 is a flowchart illustrating an example of activation processing of a BIOS function of the laptop PC according to the present embodiment.
FIG. 10 is a flowchart illustrating an example of deadline management processing of a BIOS function of the laptop PC according to the present embodiment.
FIG. 11 is a flowchart illustrating another example of the deadline management processing of a BIOS function of the laptop PC according to the present embodiment.
FIG. 12 is a flowchart illustrating an example of time-change prevention processing of the laptop PC according to the present embodiment.
FIG. 13A is a diagram for describing examples of the time-change prevention processing of the laptop PC according to the present embodiment.
FIG. 13B is a diagram for describing examples of the time-change prevention processing of the laptop PC according to the present embodiment.
FIG. 14 is a chart illustrating an example of period update processing of a BIOS function by the BIOS purchasing system of the present embodiment.

### Detailed Description of the Invention

An information processing apparatus and a BIOS management method according to one embodiment of the present invention will be described below with reference to the accompanying drawings.

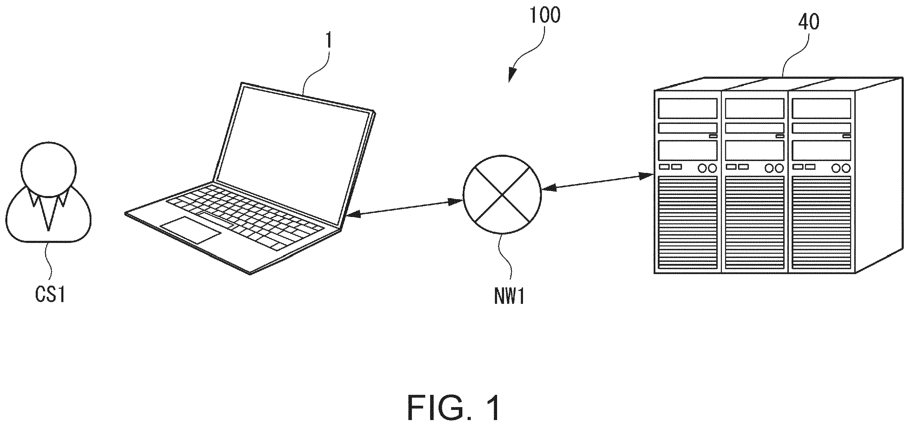

FIG. 1 is a schematic diagram illustrating a configuration example of a BIOS purchasing system 100 according to the present embodiment.

As illustrated in FIG. 1, the BIOS purchasing system 100 is a system for a customer CS1 to purchase a function of a BIOS in order to customize the BIOS of a laptop PC 1 (laptop personal computer), which includes the laptop PC 1 and a server apparatus 40.

Note that the laptop PC 1 will be described in the present embodiment as an example of the information processing apparatus.

The laptop PC 1 and the server apparatus 40 are connectable to each other through a network NW1.

The server apparatus 40 is a service management server connectable from the laptop PC 1 using browser software to provide a purchasing service in order to customize the function of the BIOS (which may also be referred to as the BIOS function) according to the customer CS1. The details of the configuration of the server apparatus 40 will be described later. Note that the BIOS function in the present embodiment is a partial function of the BIOS, that is, an optional function to customize the BIOS, which is a function to add a new function and to change the operating condition(s) of an already existing function or make a restriction (including prohibition) on the already existing function.

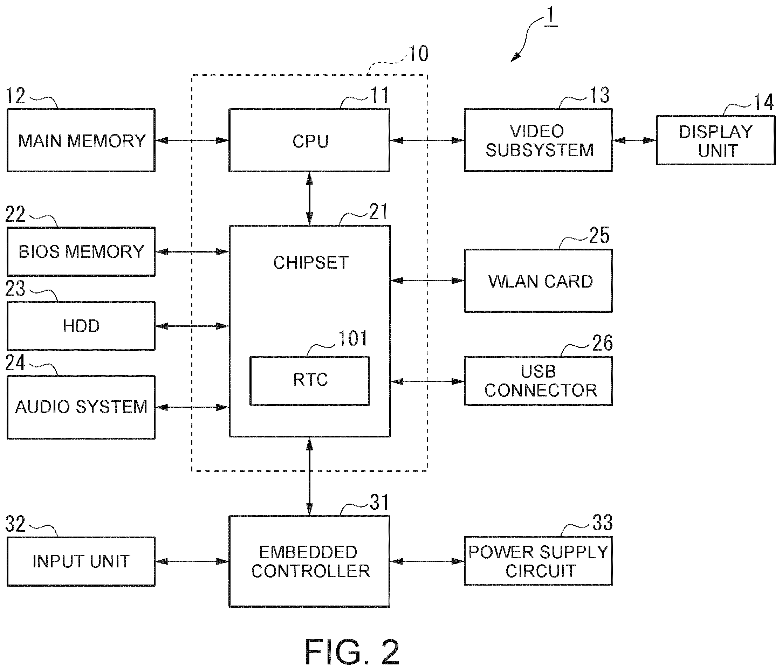

The laptop PC 1 is a PC capable of customizing a BIOS function(s) not only to perform processing for purchasing the BIOS function(s) from the server apparatus 40 and activating the BIOS function(s), but also to perform the deadline management of the BIOS function(s). Referring here to FIG. 2, the main hardware configuration of the laptop PC 1 will be described.

FIG. 2 is a block diagram illustrating an example of the main hardware configuration of the laptop PC 1 according to the present embodiment.

As illustrated in FIG. 2, the laptop PC 1 includes a CPU 11, a main memory 12, a video subsystem 13, a display unit 14, a chipset 21, a BIOS memory 22, an HDD 23, an audio system 24, a WLAN card 25, a USB connector 26, an embedded controller 31, an input unit 32, and a power supply circuit 33.

Note that the CPU 11 and the chipset 21 correspond to a main control unit 10 in the present embodiment.

The CPU (Central Processing Unit) 11 executes various kinds of arithmetic processing by program control to control the entire laptop PC 1.

The main memory 12 is a writable memory used as reading areas of execution programs of the CPU 11 or working areas to which processing data of the execution programs are written. The main memory 12 is configured, for example, to include plural DRAM (Dynamic Random Access Memory) chips. The execution programs include a BIOS (Basic Input/Output System), an OS (Operating System), various drivers for hardware-operating peripheral devices, various services/utilities, application programs, and the like.

The video subsystem 13 is a subsystem for implementing functions related to image display, which includes a video controller. This video controller processes a drawing command from the CPU 11, writes processed drawing information into a video memory, and reads this drawing information from the video memory and outputs it to the display unit 14 as drawing data (display data) .

The display unit 14 is, for example, a liquid crystal display to display a display screen based on the drawing data (display data) output from the video subsystem 13.

The chipset 21 includes controllers, such as USB (Universal Serial Bus), serial ATA (AT Attachment), an SPI (Serial Peripheral Interface) bus, a PCI (Peripheral Component Interconnect) bus, a PCI-Express bus, and an LPC (Low Pin Count) bus, and plural devices are connected to the chipset 21. In FIG. 2, the BIOS memory 22, the HDD 23, the audio system 24, the WLAN card 25, and the USB connector 26 are connected to the chipset 21 as examples of the devices.

Further, the chipset 21 includes a built-in RTC (Real Time Clock) 101.

The RTC 101 (an example of a clock unit) counts the date and time. The RTC 101 is configured to be supplied with power from an unillustrated battery so that the date and time can be counted even in such a state that the laptop PC 1 is shut down.

The BIOS memory 22 is configured, for example, by an electrically rewritable nonvolatile memory such as an EEPROM (Electrically Erasable Programmable Read Only Memory) or a flash ROM. The BIOS memory 22 stores the BIOS, system firmware for controlling the embedded controller 31, and the like.

The HDD (Hard Disk Drive) 23 (an example of a nonvolatile storage device) stores the OS, various drivers, various services/utilities, application programs, and various data.

The audio system 24 records, plays back, and outputs sound data.

The WLAN (Wireless Local Area Network) card 25 is connected to a network by wireless LAN to perform data communication. The WLAN card 25 is connected to the server apparatus 40, for example, through the network NW1 to perform data communication with the server apparatus 40 in order to purchase a BIOS function.

The USB connector 26 is a connector for connecting peripheral devices using the USB.

The embedded controller 31 (an example of a sub control unit) is a one-chip microcomputer which monitors and controls various devices (peripheral devices, sensors, and the like) regardless of the system state of the laptop PC 1. Further, the embedded controller 31 has a power management function to control the power supply circuit 33. Note that the embedded controller 31 is configured to include a CPU, a ROM, a RAM, and the like, which are not illustrated, and is equipped with multi-channel A/D input terminal and D/A output terminal, a timer, and digital input/output terminals. To the embedded controller 31, for example, the input unit 32, the power supply circuit 33, and the like are connected through these input/output terminals, and the embedded controller 31 controls the operation of these units.

The input unit 32 is composed, for example, of an input device such as a keyboard and a pointing device such as a touch pad.

The power supply circuit 33 includes, for example, a DC/DC converter, a charge/discharge unit, a battery unit, an AC/DC adapter, and the like to convert DC voltage supplied from the AC/DC adapter or the battery unit into plural voltages required to operate the laptop PC 1. Further, the power supply circuit 33 supplies power to each unit of the laptop PC 1 under the control of the embedded controller 31.

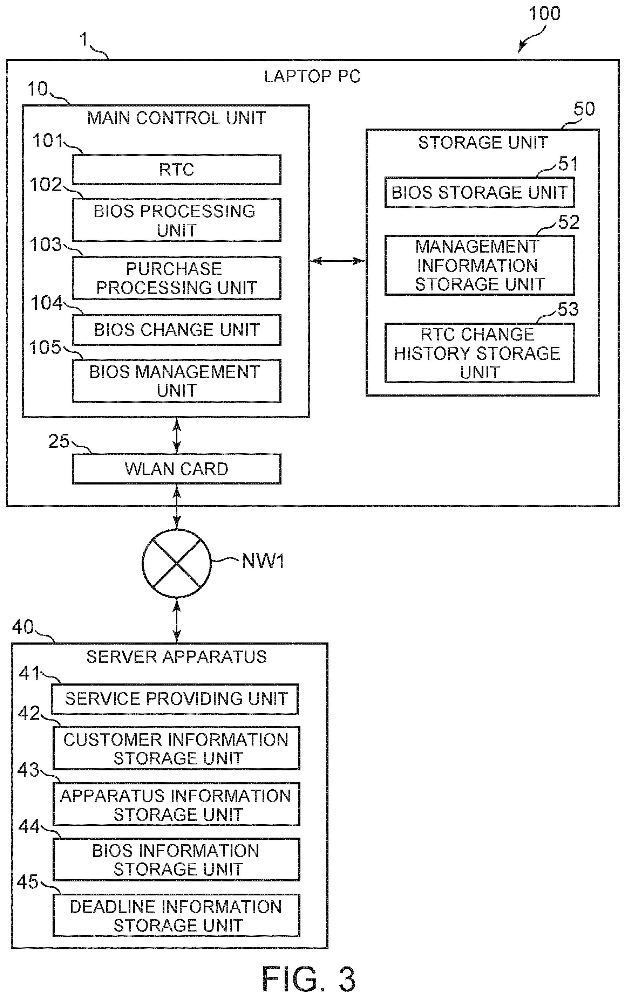

Referring next to FIG. 3, the functional configuration of the BIOS purchasing system 100 according to the present embodiment will be described.

FIG. 3 is a block diagram illustrating an example of the functional configuration of the BIOS purchasing system 100 according to the present embodiment.

As illustrated in FIG. 3, the BIOS purchasing system 100 includes the laptop PC 1 and the server apparatus 40. The server apparatus 40 includes a service providing unit 41, a customer information storage unit 42, an apparatus information storage unit 43, a BIOS information storage unit 44, and a deadline information storage unit 45. Note that only the main functional configurations related to the invention of the present embodiment are illustrated in FIG. 3 as the configurations of the laptop PC 1 and the server apparatus 40.

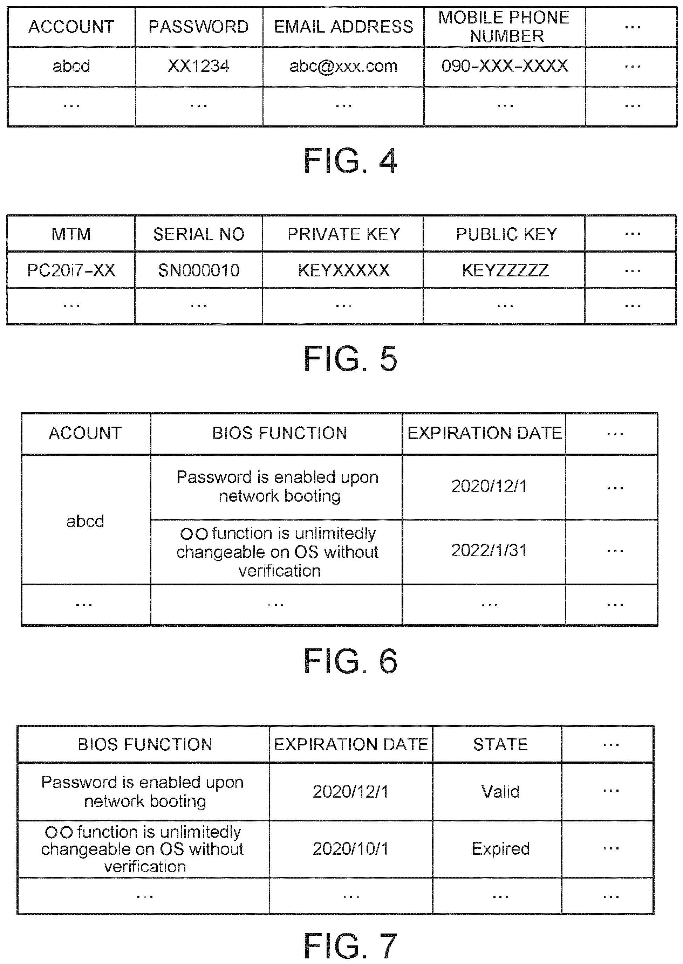

The customer information storage unit 42 stores customer information on customers using the BIOS purchasing system 100. Referring here to FIG. 4, a data example of the customer information storage unit 42 will be described.

FIG. 4 is a table illustrating a data example of the customer information storage unit 42 of the present embodiment.

As illustrated in FIG. 4, the customer information storage unit 42 stores account, password, email address, and mobile phone number in association with one another.

Here, the account and the password are login information of the customer CS1 (user) using the BIOS purchasing system 100. Further, the email address and the mobile phone number are contact information of the customer CS1, where the email address represents an electronic mail address and the mobile phone number represents the mobile phone number of the customer CS1. The email address and the mobile phone number are used for user approval as a destination to which an enable key to be described later is transmitted.

For example, in the example illustrated in FIG. 4, as for the customer CS1 with an account of "abcd," the login password is "XX1234," and the email address and the mobile phone number as contact information are "abc@xxx.com" and "090-XXX-XXXX."

Returning to FIG. 3, the apparatus information storage unit 43 stores apparatus information on apparatuses (such as the laptop PC 1 and the like) using the BIOS purchasing system 100. Referring here to FIG. 5, a data example of the apparatus information storage unit 43 will be described.

FIG. 5 is a table illustrating a data example of the apparatus information storage unit 43 of the present embodiment.

As illustrated in FIG. 5, the customer information storage unit 42 stores product model name, serial number, private key, and public key in association with one another.

Here, the product model name and the serial number are an example of apparatus identification information used for identifying the laptop PC 1. The product model name represents the product model name of the laptop PC 1, which is, for example, the name of MTM (Machine Type Model). Further, the serial number represents the product serial number of the laptop PC 1.

Further, the private key and the public key are a pair of encryption keys in public key cryptography used for authentication of the laptop PC 1, where the private key is secret key data in public key cryptography and the public key is public key data in public key cryptography. The private key and the public key are generated uniquely, for example, according to the product model name and the serial number. Note that the laptop PC 1 holds only the public key.

For example, in the example illustrated in FIG. 5, the private key and the public key corresponding to the laptop PC 1 whose product model name and serial number are "PC20i7-XX" and "SN000010" are "KEYXXXXX" and "KEYZZZZZ."

Returning to the description of FIG. 3 again, the BIOS information storage unit 44 stores BIOS information for implementing customizable BIOS functions provided in the BIOS purchasing system 100. For example, the BIOS information represents program code of each BIOS function, setting information, and the like.

The deadline information storage unit 45 sores deadline information of purchased BIOS functions. Referring here to FIG. 6, a data example of the deadline information storage unit 45 will be described.

FIG. 6 is a table illustrating a data example of the deadline information storage unit 45 of the present embodiment.

As illustrated in FIG. 6, the deadline information storage unit 45 stores account, BIOS function, and expiration date in association with one another. Here, the account represents each account described above, and the BIOS function represents the content of each purchased BIOS function. Further, the expiration date represents the expiration date of the purchased BIOS function.

For example, in the example illustrated in FIG. 6, it is indicated that the expiration date of a BIOS function purchased by the customer CS1 the account of which is "abcd" and the content of which is that "Password is enabled upon network booting" is "2020/12/1." It is further indicated that the expiration date of a BIOS function the content of which is that "oo function is unlimitedly changeable on OS without verification" is "2022/1/31."

Returning to the description of FIG. 3 again, the service providing unit 41 uses the web to execute processing for providing a BIOS function purchasing service. The service providing unit 41 not only accepts login processing from the laptop PC 1 by the customer CS1, but also accepts a purchase request for a BIOS function, for example, by a purchase form using the web to execute payment processing. After confirming payment completion using the web, the service providing unit 41 receives, from the laptop PC 1, the product model name and the serial number as the apparatus identification information. The service providing unit 41 acquires BIOS information corresponding to the purchased BIOS function from the BIOS information storage unit 44, and generates an enable key (an example of activation key data) based, for example, on a random number or the like.

Further, the service providing unit 41 generates a packet including the BIOS information for implementing the BIOS function, the enable key, the expiration date, and the product model name and the serial number. The service providing unit 41 acquires, from the apparatus information storage unit 43, a private key corresponding to the apparatus identification information received from the laptop PC 1 on which the BIOS function was purchased, generates authentication data of the generated packet (a signature, for example, a hash value of the packet) by public key cryptography, for example, using the private key, and transmits an enable package in execution format, which includes the authentication data and the above-described packet, through the network NW1 to the laptop PC 1 on which the BIOS function was purchased. Note that the authentication data is, for example, an electronic signature or the like.

Further, the service providing unit 41 acquires, from the customer information storage unit 42, the email address or the mobile phone number corresponding to the account of the customer CS1 concerned, and transmits an email or a message by SMS (Short Message Service) to the customer CS1 in a way different from the enable package.

Further, the service providing unit 41 stores, in the deadline information storage unit 45, deadline information corresponding to the purchased BIOS function.

Note that when receiving a request to update the expiration date such as an update request or cancellation request of the BIOS function, the service providing unit 41 generates an update package for updating purpose in the same manner as the case of the purchase request of the BIOS function, and transmits the update package to the laptop PC 1 as the request source through the network NW1.

Further, the service providing unit 41 regularly checks the deadline information storage unit 45 to acquire each account corresponding to a BIOS function the expiration date of which is approaching (for example, the expiration date of which is within one month) and acquire, from the customer information storage unit 42, the email address or the mobile phone number corresponding to the account concerned. The service providing unit 41 transmits an email or a message by SMS to indicate that the expiration date of the BIOS function is approaching to the customer CS1 through the acquired email address or mobile phone number.

The laptop PC 1 includes the main control unit 10, a storage unit 50, and the WLAN card 25.

The storage unit 50 is a storage unit realized, for example, by the BIOS memory 22 or the like, and includes a BIOS storage unit 51, a management information storage unit 52, and an RTC change history storage unit 53.

The BIOS storage unit 51 stores each BIOS program including BIOS program code, setting information, and the like. In the program stored in the BIOS storage unit 51, the purchased BIOS function, a public key for verifying the BIOS program code, the setting information, and the like, apparatus identification information (for example, product model name and serial number), and the like are also included.

The management information storage unit 52 is a storage unit managed by the BIOS to store management information in which each BIOS function, the expiration date of the BIOS function, and the state of the BIOS function are associated with one another. Referring here to FIG. 7, a data example of the management information storage unit 52 will be described.

FIG. 7 is a table illustrating a data example of the management information storage unit 52 of the present embodiment.

As illustrated in FIG. 7, the management information storage unit 52 stores management information in which each BIOS function, the expiration date thereof, and the state thereof are associated with one another. Here, the BIOS function represents the content of each purchased BIOS function, and the expiration date represents the expiration date of the purchased BIOS function. Further, the state represents the state of the purchased BIOS function, where the valid state is represented as "Valid" and the invalid state is represented as "Expired."

For example, in the example illustrated in FIG. 7, it is indicated that the expiration date of a BIOS function the content of which is that "Password is enabled upon network booting" is "2020/12/1," and that the state is "Valid" (valid state). It is further indicated that the expiration date of a BIOS function the content of which is that ""oo function is unlimitedly changeable on OS without verification" is "2020/10/1," and that the state is "Expired" (invalid state).

Note that the management information stored in the management information storage unit 52 may also be encrypted by an encryption method in a manner to be decryptable by the BIOS.

Returning to the description of FIG. 3 again, the RTC change history storage unit 53 stores history information on changes in the date and time of the RTC 101 by the OS such as a change in time zone. For example, the RTC change history storage unit 53 stores history information in which the date and time before change, the date and time after change, and an elapsed period (elapsed time) since the last change are associated with one another.

The main control unit 10 is a functional unit implemented by the CPU 11 and the chipset 21 executing programs stored in the BIOS memory 22 and the HDD 23 to execute various processing of the laptop PC 1 based on the BIOS or the OS. The main control unit 10 includes the RTC 101, a BIOS processing unit 102, a purchase processing unit 103, a BIOS change unit 104, and a BIOS management unit 105.

The BIOS processing unit 102 executes BIOS processing executed by a BIOS program stored in the BIOS storage unit 51. For example, the BIOS processing unit 102 performs check processing on the BIOS program upon startup of the laptop PC 1, initialization processing on peripheral equipment and devices, OS boot processing, and basic input/output control on the peripheral equipment and devices.

The purchase processing unit 103 executes purchase processing of a BIOS function by the BIOS purchasing system 100. In response to a request from the customer CS1, the purchase processing unit 103 transmits a purchase request, an update request, a cancellation request, or the like of the BIOS function to the server apparatus 40 through the WLAN card 25.

Further, the purchase processing unit 103 receives an enable package or an update package from the server apparatus 40 through the WLAN card 25 to execute the received enable package or update package so as to pass control to the BIOS.

The BIOS change unit 104 is a functional unit executed by the BIOS, which is configured as part of the BIOS. The BIOS change unit 104 stores, in the BIOS storage unit 51, BIOS information received from the server apparatus 40 to enable the BIOS function, and stores management information in the management information storage unit 52. For example, the BIOS change unit 104 acquires, together with acquired data, authentication data generated based on a packet (acquired data) including the BIOS information and a private key corresponding to the laptop PC 1 and received from the server apparatus 40, and determines the validity of the packet (acquired data) based on a public key corresponding to the private key and the authentication data. When the acquired data is valid, the BIOS change unit 104 stores the BIOS information in the BIOS storage unit 51 to enable the BIOS function.

Specifically, the BIOS change unit 104 acquires a packet and authentication data, obtained by the purchase processing unit 103 executing the enable package received from the server apparatus 40, and determines the validity of the packet based on whether or not the authentication data (for example, a hash value of the packet) generated from the packet matches authentication data obtained by decrypting the acquired authentication data with the public key. When the authentication data match each other, the BIOS change unit 104 determines that the packet is valid.

Further, in the packet, apparatus identification information (for example, the product model name (MTM) and the serial number) for identifying the laptop PC 1 and the enable key to enable the BIOS function are included. When the apparatus identification information included in the packet matches the apparatus identification information of the laptop PC 1, and when an enable key transmitted to the customer CS1 in a way different from the packet and input by the customer CS1 matches the enable key included in the packet, the BIOS change unit 104 stores the BIOS information in the BIOS storage unit 51 to enable the BIOS function.

Further, when the expiration date is to be updated, the BIOS change unit 104 acquires update information for updating the expiration date corresponding to the BIOS function to enable the BIOS function and update the expiration date corresponding to the BIOS function in the management information storage unit 52 based on the update information.

The BIOS management unit 105 is a functional unit executed by the BIOS, which is configured as part of the BIOS. The BIOS management unit 105 manages the expiration date of a purchased BIOS function. When the date acquired from the RTC 101 has passed (has exceeded) the expiration date stored in the management information storage unit 52, the BIOS management unit 105 disables the BIOS function corresponding to the expiration date and changes, to the invalid state, the state of the BIOS function in the management information corresponding to the disabled BIOS function. For example, the BIOS management unit 105 puts a valid/invalid flag of the BIOS function inside the main memory 12 into an invalid state to disable the BIOS function.

For example, the BIOS management unit 105 determines whether or not the date acquired from the RTC 101 has passed the expiration date stored in the management information storage unit 52 each time the laptop PC 1 starts up. When the date has passed the expiration date upon startup of the laptop PC 1, the BIOS management unit 105 disables the BIOS function corresponding to the expiration date and changes, to the invalid state, the state of the BIOS function corresponding to the disabled BIOS function in the management information.

Further, the BIOS management unit 105 determines whether or not the date acquired from the RTC 101 has passed the expiration date stored in the management information storage unit 52 regularly in such a state that the OS (for example, Windows (registered trademark)) is running. The BIOS management unit 105 causes the embedded controller 31 to generate an event, for example, once every 24 hours in order to check on the expiration date in response to the event. In regular checking on the expiration date, when the date has passed the expiration date, the BIOS management unit 105 disables the BIOS function corresponding to the expiration date and changes, to the invalid state, the state of the BIOS function corresponding to the disabled BIOS function in the management information the next time the laptop PC 1 starts up.

Note that the BIOS management unit 105 uses SMI (System Management Interrupt) as the highest priority interrupt to disable the BIOS function when disabling the BIOS function. Further, the BIOS management unit 105 changes the state of the BIOS function in the management information storage unit 52 to the invalid state ("Expired") in POST (Power On Self Test) upon next startup of the laptop PC 1.

Further, when there is a BIOS function the expiration date of which is valid in the management information storage unit 52, the BIOS management unit 105 prohibits any change in the date and time (at least the date) of the RTC 101 by a BIOS setup menu. In other words, when the BIOS is customized, the laptop PC 1 prohibits any change in the date and time of the RTC 101 on the BIOS setup menu to prevent a fraud of the expiration date.

Further, the BIOS management unit 105 executes processing below as processing for fraud prevention of the expiration date.

When the date of the RTC 101 is changed due to a loss of power from the battery (for example, by removing the battery or the like), or when the time of the RTC 101 is changed over 24 hours (over one day) by the OS, the BIOS management unit 105 disables the BIOS function and changes, to the invalid state, the state of the BIOS function corresponding to the disabled BIOS function in the management information.

Note that when the time of the RTC 101 is changed over 24 hours (over one day) by the OS, the BIOS management unit 105 changes, to the invalid state, the state of the BIOS function corresponding to the disabled BIOS function in the management information upon next startup of the laptop PC 1 after the BIOS function is disabled.

Further, the time change in the RTC 101 by the OS is detected by the BIOS management unit 105. For example, the detection may be made by causing the BIOS management unit 105 to be able to perform execution control when there is access to I/O for the time change by the OS using an I/O trap function as a function of the chipset 21.

Further, the BIOS management unit 105 detects a date change in the RTC 101 due to the loss of power from the battery, for example, by a CMOS error.

Further, when there is a change of less than 24 hours in the time of the RTC 101 by the OS, the BIOS management unit 105 counts the change. Then, when the number of change counts becomes threshold times or more in a past predetermined period, the BIOS management unit 105 disables the BIOS function and changes, to the invalid state, the state of the BIOS function corresponding to the disabled BIOS function in the management information. When there is the change of less than 24 hours in the time of the RTC 101 by the OS, for example, the BIOS management unit 105 stores, in the RTC change history storage unit 53, history information in which the date and time before the change, the date and time after the change, and the elapsed period (elapsed time) since the last change are associated with one another.

The BIOS management unit 105 checks the history information stored in the RTC change history storage unit 53, and when there are changes of less than 24 hours three times or more (threshold times or more), for example, in the past 24 hours, the BIOS management unit 105 disables the BIOS function, and changes, to the invalid state, the state of the BIOS function corresponding to the disabled BIOS function in the management information. Note that the BIOS management unit 105 can detect the past predetermined period (past 24 hours) and the number of changes by adding up elapsed periods (elapsed times) since the last change of the history information and counting the number of changes.

Next, the operation of the BIOS purchasing system 100 and the laptop PC 1 according to the present embodiment will be described with reference to the accompanying drawings.

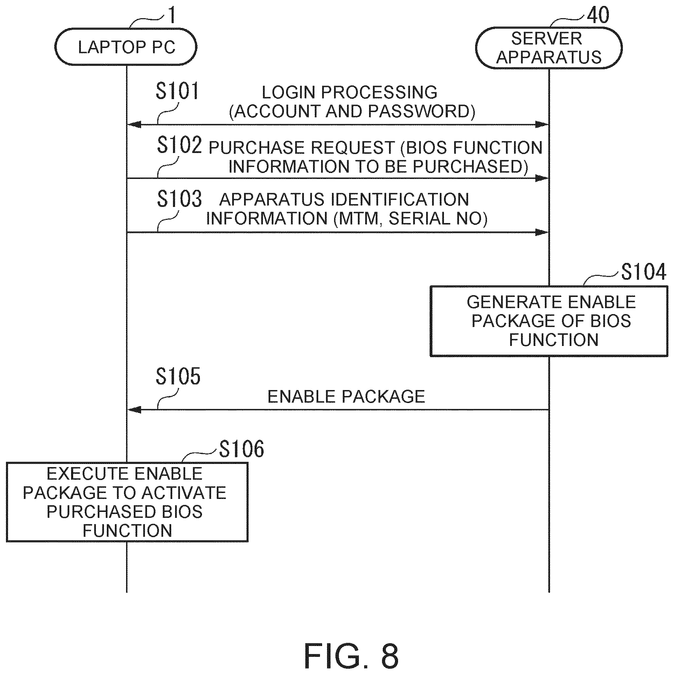

FIG. 8 is a chart illustrating an example of purchase processing of a BIOS function by the BIOS purchasing system 100 of the present embodiment.

In FIG. 8, the laptop PC 1 first connects to the server apparatus 40 using browser software and executes login processing (step S101). The purchase processing unit 103 of the laptop PC 1 connects to the server apparatus 40 through the WLAN card 25 and the network NW1, and acquires an account and a password for login processing from the customer CS1 through the input unit 32. The purchase processing unit 103 transmits the account and the password to the server apparatus 40.

The service providing unit 41 of the server apparatus 40 receives the account and the password transmitted from the laptop PC 1, and allows the login when the received account and password match the account and password stored in the customer information storage unit 42.

Next, the laptop PC 1 transmits a purchase request for a BIOS function to the server apparatus 40 (step S102). The purchase processing unit 103 transmits, to the server apparatus 40, the purchase request including information on the BIOS function to be purchased, and the server apparatus 40 executes payment processing of the purchase fee of the BIOS function.

Next, the laptop PC 1 transmits apparatus identification information to the server apparatus 40 (step S103). For example, the purchase processing unit 103 transmits, to the server apparatus 40, the product model name (MTM) and the serial number as the apparatus identification information.

Next, the server apparatus 40 generates an enable package of the purchased BIOS function (step S104). The service providing unit 41 acquires BIOS information corresponding to the purchased BIOS function from the BIOS information storage unit 44, and generates an enable key based, for example, on a random number or the like. Further, the service providing unit 41 generates a packet including the BIOS information for implementing the BIOS function, the enable key, the expiration date, and the product model name and the serial number. The service providing unit 41 acquires, from the apparatus information storage unit 43, a private key corresponding to the apparatus identification information received from the laptop PC 1 on which the BIOS function was purchased, and uses the private key to generate authentication data of the packet (for example, a hash value of the packet) by public key cryptography. The service providing unit 41 generates an enable package in execution format, which includes the authentication data and the above-described packet.

Next, the server apparatus 40 transmits the enable package to the laptop PC 1 (step S105).

Next, the laptop PC 1 executes the enable package to activate the purchased BIOS function (step S106).

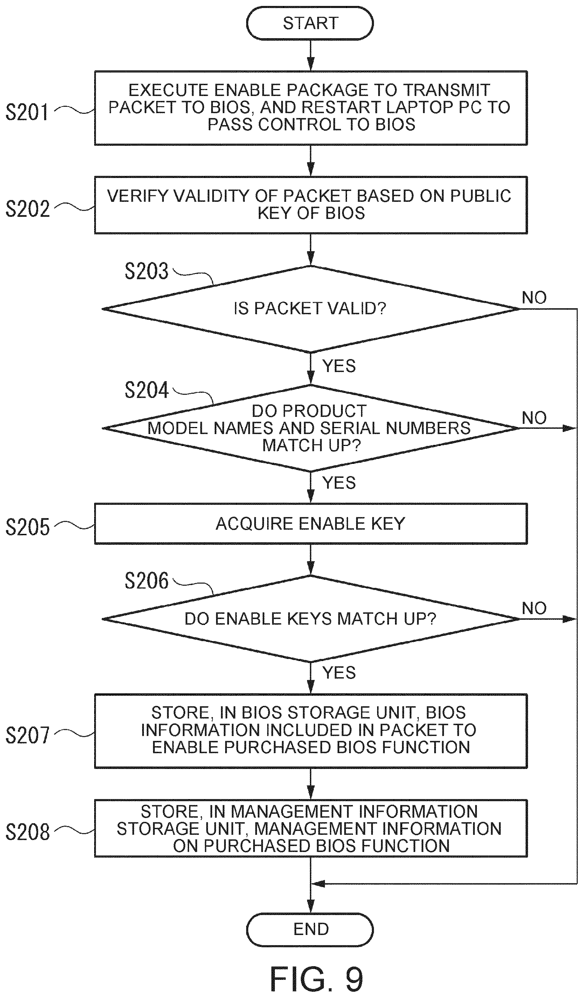

Referring next to FIG. 9, specific processing as activation processing of a purchased BIOS function by the laptop PC 1 will be described.

FIG. 9 is a flowchart illustrating an example of activation processing of a BIOS function of the laptop PC 1 according to the present embodiment. Here, the details of the process of step S106 in FIG. 8 described above will be described.

As illustrated in FIG. 9, the laptop PC 1 first executes the enable package to transmit a packet to the BIOS, and the laptop PC 1 is restarted to pass control to the BIOS (step S201). The BIOS change unit 104 of the laptop PC 1 acquires a packet and authentication data obtained by executing the enable package. Note that the packet includes the purchased BIOS information, the expiration date, the apparatus identification information (MTM and serial number), and the enable key.

Next, the BIOS change unit 104 verifies the validity of the packet based on the public key of the BIOS (step S202). For example, the BIOS change unit 104 generates authentication data (for example, a hash value of the packet) from the packet, and generates authentication data obtained by decrypting the acquired authentication data with the public key.

Next, the BIOS change unit 104 determines whether or not the packet is valid (step S203). The BIOS change unit 104 determines the validity of the packet based on whether or not the authentication data (for example, the hash value of the packet) generated on the laptop PC 1 matches the authentication data obtained by decrypting the acquired authentication data with the public key. When the authentication data match each other, the BIOS change unit 104 determines that the packet is valid. When the packet is valid (step S203: YES), the BIOS change unit 104 proceeds to a process in step S204. On the other hand, when the packet is not valid (step S203: NO), the BIOS change unit 104 ends the processing.

In step S204, the BIOS change unit 104 determines whether or not the product model names and the serial numbers match up. In other words, the BIOS change unit 104 determines whether or not the product model name and the serial number included in the packet match the product model name and the serial number of the laptop PC 1. When the product model names and the serial numbers match up (step S204: YES), the BIOS change unit 104 proceeds to a process in step S205. On the other hand, when the product model names and the serial numbers do not match up (step S204: NO), the BIOS change unit 104 ends the processing.

In step S205, the BIOS change unit 104 acquires an enable key. The BIOS change unit 104 acquires an enable key, transmitted to the customer CS1 by email or SMS, from the customer CS1 through the input unit 32.

Next, the BIOS change unit 104 determines whether or not the enable keys match up (step S206). In other words, the BIOS change unit 104 determines whether or not the enable key included in the packet matches the enable key acquired from the customer CS1. When the enable keys match up (step S206: YES), the BIOS change unit 104 proceeds to a process in step S207. On the other hand, when the enable keys do not match up (step S206: NO), the BIOS change unit 104 ends the processing.

In step S207, the BIOS change unit 104 stores, in the BIOS storage unit 51, BIOS information included in the packet to activate the purchased BIOS function.

Next, the BIOS change unit 104 stores, in the management information storage unit 52, management information on the purchased BIOS function (step S208). In other words, as illustrated in FIG. 7, the BIOS change unit 104 stores, in the management information storage unit 52, management information in which the BIOS function, the expiration date, and the state of the BIOS function are associated with one another. Note that it is assumed that the management information stored in the management information storage unit 52 can be referred to from the OS by SMBIOS (System Management BIOS) of DMTF (Distributed Management Task Force). After the process in step S208, the BIOS change unit 104 ends the processing.

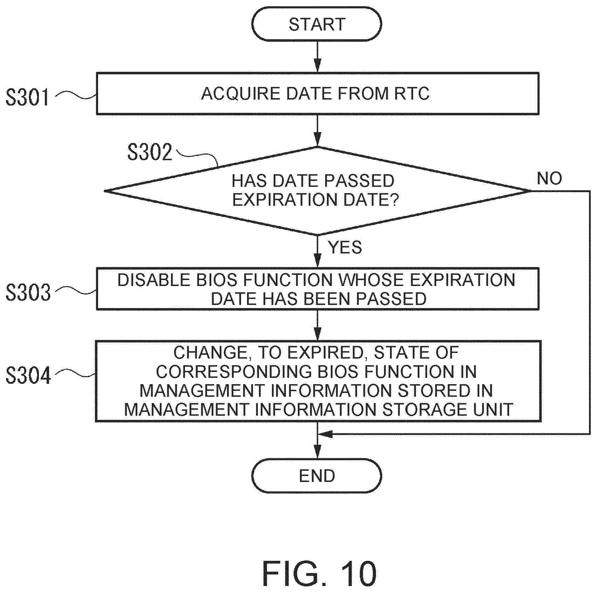

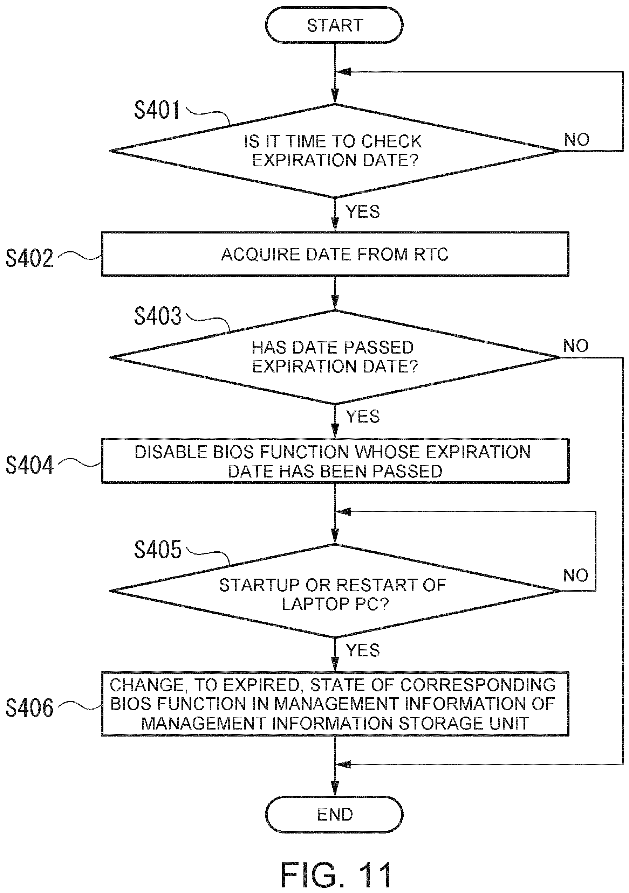

Referring next to FIG. 10 and FIG. 11, deadline management processing of a BIOS function of the laptop PC 1 according to the present embodiment will be described.

FIG. 10 is a flowchart illustrating an example of deadline management processing of a BIOS function of the laptop PC 1 according to the present embodiment. Here, processing for checking the expiration date every time the laptop PC 1 starts up will be described.

As illustrated in FIG. 10, the BIOS management unit 105 of the laptop PC 1 first acquires the date from the RTC 101 when the laptop PC 1 starts up (step S301).

Next, the BIOS management unit 105 determines whether or not the date has passed each expiration date (step S302). The BIOS management unit 105 determines whether or not there is any BIOS function the expiration date of which has been passed by the date acquired from the RTC 101 in the management information stored in the management information storage unit 52. When the date has passed the expiration date (step S302: YES), the BIOS management unit 105 proceeds to a process in step S303. On the other hand, when the date is within the expiration date (step S302: NO), the BIOS management unit 105 ends the processing.

In step S303, the BIOS management unit 105 disables the BIOS function the expiration date of which has been passed.

Next, the BIOS management unit 105 changes, to "Expired," the state of the corresponding BIOS function in the management information stored in the management information storage unit 52 (step S304). In other words, the BIOS management unit 105 changes, to invalid (expired), the state of the BIOS function corresponding to the BIOS function the expiration date of which has been passed in the management information. After the process in step S304, the BIOS management unit 105 ends the processing.

Referring next to FIG. 11, processing when each expiration date is checked regularly will be described.

FIG. 11 is a flowchart illustrating another example of the deadline management processing of a BIOS function of the laptop PC 1 according to the present embodiment. Here, processing when the expiration date is checked by the OS once a day will be described.

As illustrated in FIG. 11, when the expiration date is checked by the OS, the laptop PC 1 first determines whether or not it is the time to check the expiration date (step S401). The BIOS management unit 105 of the laptop PC 1 uses the event of the embedded controller 31 to determine whether or not it is the predetermined time to check. When it is the time to check the expiration date (step S401: YES), the BIOS management unit 105 proceeds to a process in step S402. On the other hand, when it is not the time to check the expiration date (step S401: NO), the BIOS management unit 105 returns to the process in step S401.

Since processes from step S402 to step S404 are the same as the processes from step S301 to step S303 illustrated in FIG. 10 described above, the description thereof will be omitted.

Next, the BIOS management unit 105 waits for the startup or restart of the laptop PC 1 (step S405). When the laptop PC 1 starts up or restarts (step S405: YES), the BIOS management unit 105 proceeds to a process in step S406. On the other hand, when the laptop PC 1 does not start up or restart (step S405: NO), the BIOS management unit 105 returns to the process in step S405 to wait until the laptop PC 1 starts up or restart.

In step S406, the BIOS management unit 105 executes the same process as that in step S303 illustrated in FIG. 10 described above to change, to expired, the state of the corresponding BIOS function in the management information of the management information storage unit 52. In other words, the BIOS management unit 105 changes, to invalid (expired), the state of the BIOS function corresponding to the BIOS function the expiration date of which has been passed in the management information. After the process in step S406, the BIOS management unit 105 ends the processing.

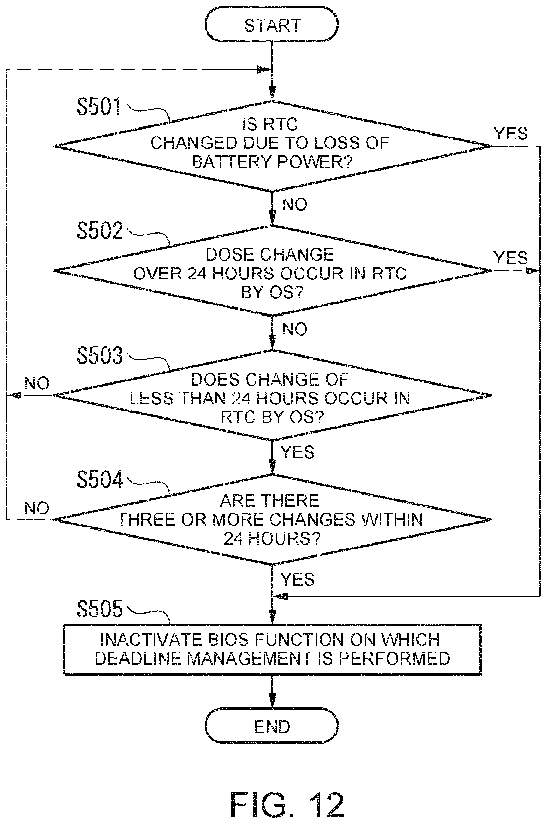

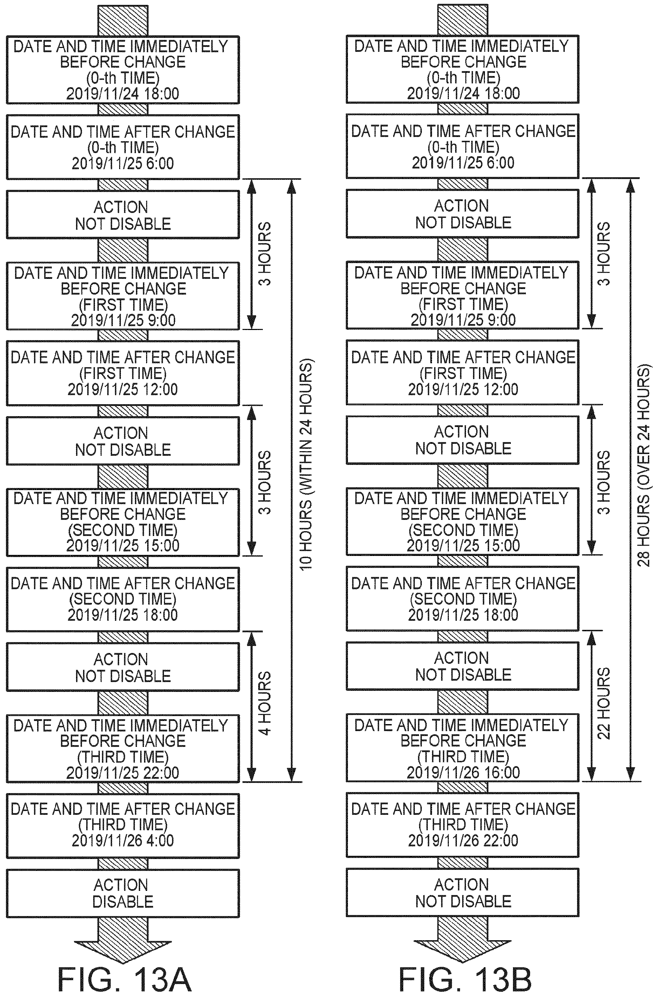

Referring next to FIG. 12 and FIGS. 13A and 13B, time-change prevention processing of the laptop PC 1 will be described.

FIG. 12 is a flowchart illustrating an example of time-change prevention processing of the laptop PC 1 according to the present embodiment.

As illustrated in FIG. 12, the laptop PC 1 first determines whether or not the RTC 101 is changed due to a loss of battery power (step S501). The BIOS management unit 105 of the laptop PC 1 determines whether or not the RTC 101 is changed due to a loss of battery power according to whether or not a CMOS error occurs in the RTC 101. When the RTC 101 is changed due to the loss of battery power (step S501: YES), the BIOS management unit 105 proceeds to a process in step S505. On the other hand, when the RTC 101 is not changed due to the loss of battery power (step S501: NO), the BIOS management unit 105 proceeds to a process in step S502.

In step S502, the BIOS management unit 105 determines whether or not the RTC 101 is changed over 24 hours by the OS. When the change over 24 hours occurs (step S502: YES), the BIOS management unit 105 proceeds to a process in step S505. On the other hand, when the change over 24 hours does not occur (step S502: NO), the BIOS management unit 105 proceeds to a process in step S503.

In step S503, the BIOS management unit 105 determines whether or not a change of less than 24 hours occurs in the RTC 101 by the OS. When a change of less than 24 hours occurs (step S503: YES), the BIOS management unit 105 proceeds to a process in step S504. On the other hand, when no change of less than 24 hours occurs (step S503: NO), the BIOS management unit 105 returns to the process in step S501.

In step S504, the BIOS management unit 105 determines whether or not there are three or more changes within 24 hours. The BIOS management unit 105 generates the past predetermined period (past 24 hours) and the number of changes by adding up elapsed periods (elapsed times) since the last change of the history information stored in the RTC change history storage unit 53 and counting the number of changes. When there are three or more changes within 24 hours (step S504: YES), the BIOS management unit 105 proceeds to a process in step S505. On the other hand, when the number of changes within 24 hours is not three times or more (step S504: NO), the BIOS management unit 105 returns to the process in step S501.

In step S505, the BIOS management unit 105 inactivates the BIOS function on which deadline management is performed. In other words, the BIOS management unit 105 disables the BIOS function on which deadline management is performed, and changes, to expired, the state of the corresponding BIOS function in the management information of the management information storage unit 52. After the process in step S505, the BIOS management unit 105 ends the processing.

FIGS. 13A and 13B are diagrams for describing examples of the time-change prevention processing of the laptop PC 1 according to the present embodiment.

In an example illustrated in FIG. 13A, since the time is changed three times in 10 hours, the number of time changes is three times or more in 24 hours. Therefore, the BIOS management unit 105 determines that the date and time of the RTC 101 are tampered with, and deactivates the BIOS function.

Further, in an example illustrated in FIG. 13B, since the time is changed three times in 28 hours and this does not fall under the condition that the number of time changes is three times or more in 24 hours, the BIOS management unit 105 does not deactivate the BIOS function.

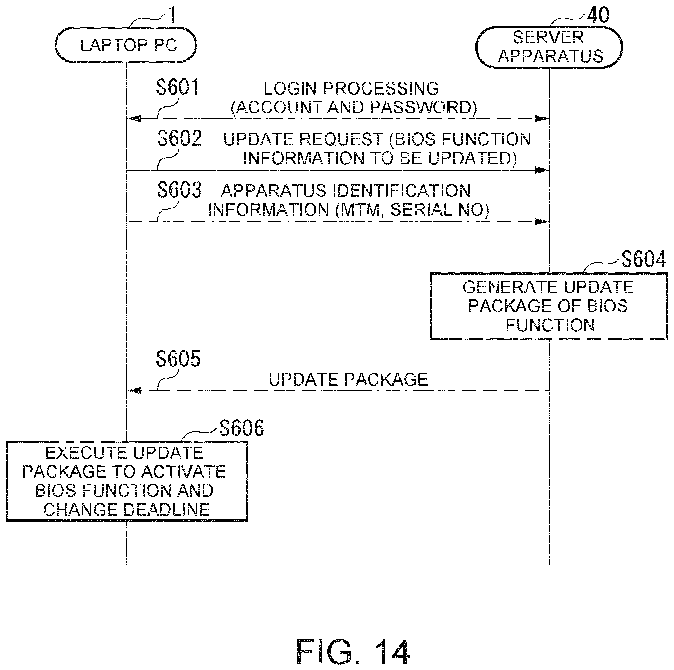

Referring next to FIG. 14, period update processing of a BIOS function by the BIOS purchasing system 100 of the present embodiment will be described.

FIG. 14 is a chart illustrating an example of period update processing of a BIOS function by the BIOS purchasing system 100 of the present embodiment.

As illustrated in FIG. 14, the laptop PC 1 first connects to the server apparatus 40 using browser software and executes login processing (step S601).

Next, the laptop PC 1 transmits, to the server apparatus 40, an update request of a BIOS function such as to extend the expiration date (step S602). The purchase processing unit 103 of the laptop PC 1 transmits, to the server apparatus 40, the update request including information on the BIOS function the expiration date of which is to be updated, and the server apparatus 40 executes payment processing of the purchase fee of the BIOS function.

Next, the laptop PC 1 transmits apparatus identification information to the server apparatus 40 (step S603). For example, the purchase processing unit 103 transmits, to the server apparatus 40, the product model name (MTM) and the serial number as the apparatus identification information.

Next, the server apparatus 40 generates an update package of the purchased BIOS function (step S604). The service providing unit 41 generates the update package in the same manner as the enable package described above.

Next, the server apparatus 40 transmits the update package to the laptop PC 1 (step S605).

Next, the laptop PC 1 executes the update package to activate the updated BIOS function and change the deadline (step S606). Since the details of the activation of the updated BIOS function and the deadline change are the same as the above-described processing illustrated in FIG. 9 except that the BIOS function already purchased is activated and the deadline thereof is changed, the description thereof will be omitted here.

Note that the update request of a BIOS function is made such as to extend the expiration date in the above-described example illustrated in FIG. 14. However, since a cancellation request to cancel the purchase contract of the BIOS function is also made in the same manner, the description thereof will be omitted here. Further, for example, when the date and time of the RTC 101 is changed to make the BIOS function become the invalid state even within the expiration date, the laptop PC 1 according to the present embodiment can use the above-described update request of the BIOS function to activate the BIOS function again.

As described above, the laptop PC 1 (information processing apparatus) according to the present embodiment includes the BIOS storage unit 51, the management information storage unit 52, the BIOS change unit 104, and the BIOS management unit 105. The BIOS storage unit 51 stores the BIOS program. The management information storage unit 52 stores management information in which each BIOS function (each function of the BIOS), the expiration date of the BIOS function, and the state of the BIOS function are associated with one another. The BIOS change unit 104 stores, in the BIOS storage unit 51, BIOS information received from the server apparatus 40 to implement a BIOS function in response to a request from the customer so as to enable the BIOS function, and stores the management information in the management information storage unit 52. Then, when the date acquired from the RTC 101 (clock unit) has passed an expiration date stored in the management information storage unit 52, the BIOS management unit 105 disables a BIOS function corresponding to the expiration date, and changes, to the invalid state, the BIOS function corresponding to the disabled BIOS function in the management information.

Thus, since the laptop PC 1 according to the present embodiment has the BIOS change unit 104 activate a BIOS function acquired from the server apparatus 40, and has the BIOS management unit 105 inactivate a BIOS function the expiration date of which has been passed, the expiration date can be set to customize the BIOS. Further, the laptop PC 1 according to the present embodiment has no need to prepare a BIOS dedicated for the customer and use a BIOS hidden function. In other words, the laptop PC 1 according to the present embodiment can reduce man-hours to develop the BIOS dedicated to the customer and reduce the outflow of the BIOS hidden function to threaten security.

Further, the laptop PC 1 according to the present embodiment can customize a BIOS with a large degree of freedom by acquiring (purchasing) BIOS information from the server apparatus 40, such as to add a new BIOS function or deactivate an already existing BIOS function. In the laptop PC 1 according to the present embodiment, for example, a secure boot function to execute boot processing when the validity of a BIOS program is confirmed can be always enabled to make it easy to customize such a BIOS as to prohibit the setting change for inactivating the secure boot function and to activate a BIOS function with an expiration date.

Further, in the present embodiment, the BIOS change unit 104 acquires, together with acquired data, authentication data generated based on the acquired data (packet) including BIOS information and a private key (secret key data) corresponding to the laptop PC 1 and received from the server apparatus 40. The BIOS change unit 104 determines the validity of the authentication data (packet) based on a public key (public key data) corresponding to the private key and the authentication data (packet), and when the authentication data (packet) is valid, the BIOS information is stored in the BIOS storage unit 51 to enable the BIOS function.

Thus, since only the laptop PC 1 having the public key (public key data) can activate the acquired (purchased) BIOS function, the laptop PC 1 according to the present embodiment can reduce the tampering of the acquired (purchased) BIOS function and the misappropriation of the BIOS function.

Further, in the present embodiment, the acquired data (packet) includes apparatus identification information for identifying the laptop PC 1 (for example, MTM and serial number) and an enable key (activation key data) to enable the BIOS function. When the apparatus identification information included in the acquired data (packet) matches the apparatus identification information of the laptop PC 1, and when an enable key transmitted to the customer in a way different from the acquired data (packet) and input by the customer CS1 matches the enable key included in the acquired data (packet), the BIOS change unit 104 stores the BIOS information in the BIOS storage unit 51 to enable the BIOS function.

Thus, the laptop PC 1 according to the present embodiment can reduce fraud, such as to pretend to be the customer CS1 so as to activate the BIOS function fraudulently or activate the BIOS function on another laptop PC (another information processing apparatus) fraudulently.

Further, in the present embodiment, the BIOS management unit 105 determines whether or not the date acquired from the RTC 101 has passed an expiration date stored in the management information storage unit 52 each time the laptop PC 1 starts up, and when the date has passed an expiration date, the BIOS management unit 105 disables a BIOS function corresponding to the expiration date and changes, to the invalid state, the state of the BIOS function corresponding to the disabled BIOS function in the management information.

Thus, since the laptop PC 1 according to the present embodiment checks each expiration date each time the laptop PC 1 starts up, the expiration date of each BIOS function can be managed properly.

Further, in the present embodiment, the BIOS management unit 105 determines whether or not the date acquired from the RTC 101 has passed any expiration date stored in the management information storage unit 52 regularly in such a state that the OS is running, and when the date has passed the expiration date, the BIOS management unit 105 disables a BIOS function corresponding to the expiration date, and changes, to the invalid state, the state of the BIOS function corresponding to the disabled BIOS function in the management information the next time the laptop PC 1 starts up.

Thus, the laptop PC 1 according to the present embodiment can manage the expiration date of each BIOS function properly while the OS is running.

Further, in the present embodiment, when there is a BIOS function the expiration date of which is valid in the management information storage unit 52, the BIOS management unit 105 prohibits any change in the date of the RTC 101 by the BIOS setup menu.

Thus, since the laptop PC 1 according to the present embodiment cannot change the date of the RTC 101 by the BIOS setup menu, unauthorized use of the BIOS function such as to change the date of the RTC 101 in order to extend the expiration date of the BIOS function can be reduced.

Further, in the present embodiment, when the date of the RTC 101 is changed due to the loss of power from the battery, or when the time of the RTC 101 is changed over 24 hours by the OS, the BIOS management unit 105 disables the BIOS function and changes, to the invalid state, the state of the BIOS function corresponding to the disabled BIOS function in the management information.

Thus, the laptop PC 1 according to the present embodiment can reduce unauthorized use of the BIOS function such as to extend the expiration date of the BIOS function due to battery deterioration or by removing the battery supplying power to the RTC 101 intentionally, or by changing the date of the RTC 101 intentionally by the OS.

Further, in the present embodiment, when there is a change of less than 24 hours in the time of the RTC 101 by the OS, the BIOS management unit 105 counts the change, and when the number of change counts becomes threshold times or more (for example, three times or more) in the past predetermined period (for example, in the past period of 24 hours), the BIOS management unit 105 disables the BIOS function and changes, to the invalid state, the state of the BIOS function corresponding to the disabled BIOS function in the management information.

Thus, the laptop PC 1 according to the present embodiment can manage the expiration date of each BIOS function properly even when there is a change in the time of the RTC 101, for example, due to a change in time zone or by adjusting a time shift.

Further, in the present embodiment, when updating the expiration date, the BIOS change unit 104 acquires update information for updating the expiration date corresponding to the BIOS function to enable the BIOS function based on the update information, and updates the expiration date corresponding to the BIOS function in the management information storage unit 52.

Thus, the laptop PC 1 according to the present embodiment can respond properly to contract extension or contract cancellation of the BIOS function, re-activation of the BIOS function when the BIOS function is disabled within the expiration date, and the like.

Further, in the present embodiment, the BIOS change unit 104 and the BIOS management unit 105 are configured as part of the BIOS.

Thus, since the laptop PC 1 according to the present embodiment can cause the BIOS itself to activate each acquired (purchased) BIOS function and manage the expiration date thereof, a fraud such as a modification can be suppressed and hence the BIOS function can be managed more securely.

Further, in the present embodiment, the management information stored in the management information storage unit 52 is configured to be able to be referred to from the OS by SMBIOS of DMTF.

Thus, the laptop PC 1 according to the present embodiment can confirm, easily from the OS, the expiration date of the purchased BIOS function, the state of the BIOS function (valid/expired), and the like.

Further, a BIOS management method according to the present embodiment is a BIOS management method of the laptop PC 1 (information processing apparatus) including the BIOS storage unit 51 for storing a BIOS program, and the management information storage unit 52 for storing management information in which each BIOS function, the expiration date of the BIOS function, and the state of the BIOS function are associated with one another, the BIOS management method including a BIOS change step and a BIOS management step. In the BIOS change step, the BIOS change unit 104 stores, in the BIOS storage unit 51, BIOS information received from the server apparatus 40 to implement the BIOS function in response to a request from the customer to enable the BIOS function, and stores management information in the management information storage unit 52. In the BIOS management step, when the date acquired from the RTC 101 has passed an expiration date stored in the management information storage unit 52, the BIOS management unit 105 disables a BIOS function corresponding to the expiration date and changes, to the invalid state, the state of the BIOS function corresponding to the disabled BIOS function in the management information.

Thus, the BIOS management method according to the present embodiment has the same effect as the laptop PC 1 described above, and the expiration date can be set to customize the BIOS.

Note that the present invention is not limited to the aforementioned embodiment, and changes can be made without departing from the scope of the present invention.

For example, the example in which the information processing apparatus is the laptop PC 1 is described in the aforementioned embodiment, but the present invention is not limited to this example. For example, the information processing apparatus may also be any other type of information processing apparatus such as a tablet terminal or a desktop PC.

Further, in the aforementioned embodiment, the BIOS purchasing system 100 is described on the assumption that a BIOS function is purchased, but the system may also be a BIOS management system which provides a BIOS function with an expiration date free of charge.

Further, in the aforementioned embodiment, the server apparatus 40 is described as one apparatus, but the present invention is not limited to this example, and it may also be composed of two or more apparatuses (for example, two or more server apparatuses).

Further, in the aforementioned embodiment, the example in which the expiration date of each BIOS function is self-managed inside the laptop PC 1 is described, but the management of the expiration date may also be performed on the server apparatus 40 in such a manner that the management by the laptop PC 1 and the management by the server apparatus 40 are performed in combination. In this case, for example, when the state of a BIOS function becomes the invalid state even within the expiration date due to a change in the date and time of the RTC 101, a re-activation instruction may be transmitted from the server apparatus 40 to the laptop PC 1 upon connecting the laptop PC 1 to the server apparatus 40 through the network NW1.

Further, in the aforementioned embodiment, the example in which the BIOS change unit 104 and the BIOS management unit 105 are included in the main control unit 10 is described, but some of the functions of the BIOS change unit 104 and the BIOS management unit 105 may be included in the embedded controller 31.

Further, in the aforementioned embodiment, the example in which the laptop PC 1 uses browser software upon purchasing a BIOS function is described, but the present invention is not limited to this example, and an application dedicated to purchasing the BIOS function may also be used. In this case, the purchase processing unit 103 may be a functional unit implemented by executing this application dedicated to purchasing the BIOS function.

Note that each of the components included in the laptop PC 1 described above has a computer system therein. Then, a program for implementing the function of each component included in the laptop PC 1 described above may be recorded on a computer-readable recording medium so that the program recorded on this recording medium is read into the computer system and executed to perform processing in each component included in the laptop PC 1 described above. Here, the fact that "the program recorded on the recording medium is read into the computer system and executed" includes installing the program on the computer system. It is assumed that the "computer system" here includes the OS and hardware such as a peripheral device and the like.

Further, the "computer system" may also include two or more computers connected through a network including the Internet, WAN, LAN, and a communication line such as a dedicated line. Further, the "computer-readable recording medium" means a storage medium such as a flexible disk, a magneto-optical disk, a ROM, a portable medium like a CD-ROM, or a hard disk incorporated in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the laptop PC 1, or delivery servers for delivering respective divided pieces of the program may be different from one another. Further, the "computer-readable recording medium" includes a medium on which the program is held for a given length of time, such as a volatile memory (RAM) inside a computer system as a server or a client when the program is transmitted through the network. The above-mentioned program may also be to implement some of the functions described above. Further, the program may be a so-called differential file (differential program) capable of implementing the above-described functions in combination with a program(s) already recorded in the computer system.

Further, some or all of the above-described functions may be realized as an integrated circuit such as LSI (Large Scale Integration). Each of the above-described functions may be implemented as a processor individually, or part or whole thereof may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

### [Description of Symbols]

- 1: laptop PC
- 10: main control unit
- 11: CPU
- 12: main memory
- 13: video subsystem
- 14: display unit
- 21: chipset
- 22: BIOS memory
- 23: HDD
- 24: audio system
- 25: WLAN card
- 26: USB connector
- 31: embedded controller (EC)
- 32: input unit
- 33: power supply circuit
- 40: server apparatus
- 41: service providing unit
- 42: customer information storage unit
- 43: apparatus information storage unit
- 44: BIOS information storage unit
- 45: deadline information storage unit
- 50: storage unit
- 51: BIOS storage unit
- 52: management information storage unit
- 53: RTC change history storage unit
- 100: BIOS purchasing system
- 101: RTC
- 102: BIOS processing unit
- 103: purchase processing unit
- 104: BIOS change unit
- 105: BIOS management unit
- CS1: customer
- NW1: network

## Claims

1. An information processing apparatus (100) comprising:
a BIOS storage unit (51) which is arranged to store a Basic Input Output System, BIOS, program;
a management information storage unit (52) which is arranged to store management information in which each of a BIOS function, an expiration date of the BIOS function, and a state of the BIOS function are associated with one another;
a BIOS change unit (104) which is arranged to store, in the BIOS storage unit (51), a BIOS information received from a server apparatus to implement the BIOS function according to a request from a customer so as to enable the BIOS function, and to store management information in the management information storage unit (52); and
a BIOS management unit (105) which is arranged to, when a date acquired from a clock unit has passed the expiration date stored in the management information storage unit (52), disable the BIOS function corresponding to the expiration date, and change the state of the BIOS function corresponding to the disabled BIOS function in the management information to an invalid state,
wherein when the date of the clock unit is changed due to a loss of power from a battery, or when a time of the clock unit is changed over 24 hours by the Operating System, OS, the BIOS management unit (105) is further arranged to disable the BIOS function and changes, to the invalid state, the state of the BIOS function corresponding to the disabled BIOS function in the management information, and
wherein when there is a change of less than 24 hours in the time of the clock unit by the OS, the BIOS management unit (105) is further arranged to count the change, and when the number of change counts becomes threshold times or more in a past predetermined period, the BIOS management unit (105) is further arranged to disable the BIOS function and changes, to the invalid state, the state of the BIOS function corresponding to the disabled BIOS function in the management information.

2. The information processing apparatus according to claim 1,
wherein the BIOS change unit (104) is arranged to acquire, together with the BIOS information, authentication data generated based on the BIOS information and secret key data corresponding to the information processing apparatus (100) and received from the server apparatus, determine validity of the BIOS information based on public key data corresponding to the secret key data and the authentication data, and when the BIOS information is valid, store the BIOS information in the BIOS storage unit (51) to enable the BIOS function.

3. The information processing apparatus (100) according to claim 1 or claim 2, wherein
the BIOS information includes apparatus identification information for identifying the information processing apparatus (100) and activation key data to enable the BIOS function, and
when the apparatus identification information included in the BIOS information matches the apparatus identification information of the information processing apparatus (100), and when the activation key data transmitted to the customer in a way different from the BIOS information and input by the customer matches the activation key data included in the BIOS information, the BIOS change unit (104) is further arranged to store the BIOS information in the BIOS storage unit (51) to enable the BIOS function.

4. The information processing apparatus (100) according to any one of claims 1 to 3, wherein the BIOS management unit (105) is further arranged to determine whether or not the date acquired from the clock unit has passed the expiration date stored in the management information storage unit (52) each time the information processing apparatus (100) starts up, and when the date has passed the expiration date, the BIOS management unit (105) is further arranged to disable the BIOS function corresponding to the expiration date and changes, to the invalid state, the state of the BIOS function corresponding to the disabled BIOS function in the management information.

5. The information processing apparatus (100) according to any one of claims 1 to 4, wherein the BIOS management unit (105) is further arranged to determine whether or not the date acquired from the clock unit has passed the expiration date stored in the management information storage unit (52) regularly in such a state that an OS (Operating System) is running, and when the date has passed the expiration date, the BIOS management unit (105) is further arranged to disable the BIOS function corresponding to the expiration date and changes, to the invalid state, the state of the BIOS function corresponding to the disabled BIOS function in the management information the next time the information processing apparatus (100) starts up.

6. The information processing apparatus (100) according to any one of claims 1 to 5, wherein when there is any BIOS function the expiration date of which is valid in the management information storage unit (52), the BIOS management unit (105) is further arranged to prohibit any change in the date of the clock unit by a BIOS setup menu.

7. The information processing apparatus (100) according to any one of claims 1 to 6, wherein when updating the expiration date, the BIOS change unit (104) is further arranged to acquire update information for updating the expiration date corresponding to the BIOS function, and based on the update information, enable the BIOS function and updates the expiration date corresponding to the BIOS function in the management information storage unit (52).

8. The information processing apparatus (100) according to any one of claims 1 to 7, wherein the BIOS change unit (104) and the BIOS management unit (105) are configured as part of a BIOS.

9. A BIOS management method of an information processing apparatus (100) including a BIOS storage unit (51) which is arranged to store a Basic Input Output System, BIOS, program and a management information storage unit (52) which is arranged to store management information in which each of a BIOS function, an expiration date of the BIOS function, and a state of the BIOS function are associated with one another, the BIOS management method comprising:
a step of causing a BIOS change unit (104) to store, in the BIOS storage unit (51), a BIOS information received from a server apparatus to implement a BIOS function according to a request from a customer so as to enable the BIOS function, and to store management information in the management information storage unit (52); and
a step of causing a BIOS management unit (105) to disable the BIOS function corresponding to an expiration date when a date acquired from a clock unit has passed the expiration date stored in the management information storage unit (52), and to change the state of the BIOS function corresponding to the disabled BIOS function in the management information to an invalid state,
wherein when the date of the clock unit is changed due to a loss of power from a battery, or when a time of the clock unit is changed over 24 hours by the Operating System, OS, disabling the BIOS function and changing, to the invalid state, the state of the BIOS function corresponding to the disabled BIOS function in the management information, and
wherein when there is a change of less than 24 hours in the time of the clock unit by the OS, counting the change, and when the number of change counts becomes threshold times or more in a past predetermined period, disabling the BIOS function and changing, to the invalid state, the state of the BIOS function corresponding to the disabled BIOS function in the management information.

## Patentansprüche

1. Informationsverarbeitungsanordnung (100), umfassend:
eine BIOS-Speichereinheit (51), die zum Speichern eines Basis-Eingabe-/Ausgabe-Systems, BIOS (Basic Input Output System), eingerichtet ist,
eine Verwaltungsinformationsspeichereinheit (52), die so eingerichtet ist, dass sie Verwaltungsinformationen speichert, in denen jeweils eine BIOS-Funktion, ein Ablaufdatum der BIOS-Funktion und ein Status der BIOS-Funktion einander zugeordnet sind;
eine BIOS-Änderungseinheit (104), die dazu eingerichtet ist, in der BIOS-Speichereinheit (51) BIOS-Informationen zu speichern, die von einer Serveranordnung empfangen wurden, um die BIOS-Funktion nach einer Anforderung eines Kunden so zu implementieren, dass die BIOS-Funktion eingeschaltet wird, und Verwaltungsinformationen in der Verwaltungsinformationsspeichereinheit (52) zu speichern; und
eine BIOS-Verwaltungseinheit (105), die so eingerichtet ist, dass sie, wenn ein von einer Uhreneinheit erfasstes Datum das in der Verwaltungsinformationsspeichereinheit (52) gespeicherte Ablaufdatum überschritten hat, die dem Ablaufdatum entsprechende BIOS-Funktion ausschaltet und den Status der BIOS-Funktion, die der ausgeschalteten BIOS-Funktion entspricht, in den Verwaltungsinformationen in einen ungültigen Status ändert,
wobei, wenn das Datum der Uhr aufgrund eines Stromausfalls der Batterie geändert wird oder wenn eine Zeit der Uhr durch das Betriebssystem, OS, um mehr als 24 Stunden geändert wird, die BIOS-Verwaltungseinheit (105) ferner so eingerichtet ist, dass sie die BIOS-Funktion ausschaltet und den Zustand der BIOS-Funktion, der der ausgeschalteten BIOS-Funktion in den Verwaltungsinformationen entspricht, in den ungültigen Zustand ändert, und
wobei, wenn es eine Änderung von weniger als 24 Stunden in der Zeit der Uhreneinheit durch das Betriebssystem, OS, gibt, die BIOS-Verwaltungseinheit (105) ferner so eingerichtet ist, dass sie die Änderung zählt, und wenn die Anzahl der Änderungszählungen in einem vorbestimmten Zeitraum einen Schwellenwert erreicht oder überschreitet, die BIOS-Verwaltungseinheit (105) ferner so eingerichtet ist, dass sie die BIOS-Funktion ausschaltet und den Zustand der BIOS-Funktion, der der ausgeschalteten BIOS-Funktion in den Verwaltungsinformationen entspricht, in den ungültigen Zustand versetzt.

2. Informationsverarbeitungsanordnung nach Anspruch 1, wobei die BIOS-Änderungseinheit (104) so eingerichtet ist, dass sie zusammen mit den BIOS-Informationen Authentifizierungsdaten, die auf der Grundlage der BIOS-Informationen erzeugt wurden, und geheime Schlüsseldaten, die der Informationsverarbeitungsanordnung (100) entsprechen und von der Serveranordnung empfangen wurden, erfasst, die Gültigkeit der BIOS-Informationen auf der Grundlage öffentlicher Schlüsseldaten, die den geheimen Schlüsseldaten entsprechen, und der Authentifizierungsdaten bestimmt und, wenn die BIOS-Informationen gültig sind, die BIOS-Informationen in der BIOS-Speichereinheit (51) speichert, um die BIOS-Funktion einzuschalten.

3. Informationsverarbeitungsanordnung (100) nach Anspruch 1 oder Anspruch 2, wobei die BIOS-Informationen Anordnungsidentifizierungsinformationen zum Identifizieren der Informationsverarbeitungsanordnung (100) und Aktivierungsschlüsseldaten zum Einschalten der BIOS-Funktion einschließen, und
wenn die in den BIOS-Informationen eingeschlossenen Anordnungsidentifizierungsinformationen mit den Anordnungsidentifizierungsinformationen der Informationsverarbeitungsanordnung (100) übereinstimmen und wenn die Aktivierungsschlüsseldaten, die auf eine andere Weise als die BIOS-Informationen an den Kunden übertragen und von dem Kunden eingegeben wurden, mit den in den BIOS-Informationen eingeschlossenen Aktivierungsschlüsseldaten übereinstimmen, die BIOS-Änderungseinheit (104) ferner so eingerichtet ist, dass sie die BIOS-Informationen in der BIOS-Speichereinheit (51) speichert, um die BIOS-Funktion einzuschalten.

4. Informationsverarbeitungsanordnung (100) nach einem der Ansprüche 1 bis 3, wobei die BIOS-Verwaltungseinheit (105) ferner so eingerichtet ist, dass sie bei jedem Start der Informationsverarbeitungsanordnung (100) bestimmt, ob das von der Uhreneinheit erfasste Datum das in der Verwaltungsinformationsspeichereinheit (52) gespeicherte Ablaufdatum überschritten hat, und wenn das Datum das Ablaufdatum überschritten hat, die BIOS-Verwaltungseinheit (105) ferner so eingerichtet ist, dass sie die BIOS-Funktion, die dem Ablaufdatum entspricht, ausschaltet und den Zustand der BIOS-Funktion, die der ausgeschalteten BIOS-Funktion entspricht, in den Verwaltungsinformationen in den ungültigen Zustand ändert.

5. Informationsverarbeitungsanordnung (100) nach einem der Ansprüche 1 bis 4, wobei die BIOS-Verwaltungseinheit (105) ferner so eingerichtet ist, dass sie regelmäßig in einem Zustand, in dem ein Betriebssystem (OS) läuft, bestimmt, ob das von der Uhreneinheit erfasste Datum das in der Verwaltungsinformationsspeichereinheit (52) gespeicherte Ablaufdatum überschritten hat, und wenn das Datum das Ablaufdatum überschritten hat, die BIOS-Verwaltungseinheit (105) ferner so eingerichtet ist, dass sie die dem Ablaufdatum entsprechende BIOS-Funktion ausschaltet und den Zustand der BIOS-Funktion, die der ausgeschalteten BIOS-Funktion entspricht, in den Verwaltungsinformationen beim nächsten Start der Informationsverarbeitungsanordnung (100) in den ungültigen Zustand ändert.

6. Informationsverarbeitungsanordnung (100) nach einem der Ansprüche 1 bis 5, wobei, wenn in der Verwaltungsinformationsspeichereinheit (52) eine BIOS-Funktion vorhanden ist, deren Ablaufdatum gültig ist, die BIOS-Verwaltungseinheit (105) ferner so eingerichtet ist, dass sie jede Änderung des Datums der Uhreneinheit durch ein BIOS-Einstellungsmenü verhindert.

7. Informationsverarbeitungsanordnung (100) nach einem der Ansprüche 1 bis 6, wobei die BIOS-Änderungseinheit (104) bei dem Aktualisieren des Ablaufdatums ferner so eingerichtet ist, dass sie Aktualisierungsinformationen zum Aktualisieren des Ablaufdatums entsprechend der BIOS-Funktion erfasst und auf der Grundlage der Aktualisierungsinformationen die BIOS-Funktion einschaltet und das Ablaufdatum entsprechend der BIOS-Funktion in der Verwaltungsinformationsspeichereinheit (52) aktualisiert.

8. Informationsverarbeitungsanordnung (100) nach einem der Ansprüche 1 bis 7, wobei die BIOS-Änderungseinheit (104) und die BIOS-Verwaltungseinheit (105) als Teil eines BIOS konfiguriert sind.

9. BIOS-Verwaltungsverfahren einer Informationsverarbeitungsanordnung (100), einschließend eine BIOS-Speichereinheit (51), die zum Speichern eines Basis-Eingabe-/Ausgabesystems, BIOS, eines Programms und einer Verwaltungsinformationsspeichereinheit (52) eingerichtet ist, die zum Speichern von Verwaltungsinformationen eingerichtet ist, in denen eine BIOS-Funktion, ein Ablaufdatum der BIOS-Funktion und ein Zustand der BIOS-Funktion einander zugeordnet sind, das BIOS-Verwaltungsverfahren umfassend:
einen Schritt, bei dem eine BIOS-Änderungseinheit (104) veranlasst wird, in der BIOS-Speichereinheit (51) BIOS-Informationen zu speichern, die von einer Serveranordnung empfangen wurden, um eine BIOS-Funktion nach einer Anforderung eines Kunden zu implementieren, so dass die BIOS-Funktion eingeschaltet wird, und Verwaltungsinformationen in der Verwaltungsinformationsspeichereinheit (52) zu speichern; und
einen Schritt, bei dem eine BIOS-Verwaltungseinheit (105) veranlasst wird, die BIOS-Funktion entsprechend einem Ablaufdatum auszuschalten, wenn ein von einer Uhreneinheit erfasstes Datum das in der Verwaltungsinformationsspeichereinheit (52) gespeicherte Ablaufdatum überschritten hat, und den Status der BIOS-Funktion entsprechend der ausgeschalteten BIOS-Funktion in den Verwaltungsinformationen in einen ungültigen Status zu ändern,
wobei, wenn das Datum der Uhreneinheit aufgrund eines Stromausfalls der Batterie geändert wird oder wenn die Uhrzeit der Uhreneinheit durch das Betriebssystem, OS, um mehr als 24 Stunden geändert wird, die BIOS-Funktion ausgeschaltet wird, und der Zustand der BIOS-Funktion, die der ausgeschalteten BIOS-Funktion in den Verwaltungsinformationen entspricht, in den ungültigen Zustand geändert wird, und
wobei, wenn es eine Änderung von weniger als 24 Stunden in der Zeit der Uhreneinheit durch das Betriebssystem gibt, die Änderung gezählt wird, und wenn die Anzahl der Änderungszählungen in einem vorbestimmten Zeitraum in der Vergangenheit einen Schwellenwert erreicht oder überschreitet, die BIOS-Funktion ausgeschaltet wird und der Zustand der BIOS-Funktion, die der ausgeschalteten BIOS-Funktion in den Verwaltungsinformationen entspricht, in den ungültigen Zustand geändert wird.

## Revendications

1. Appareil de traitement d'informations (100), comprenant :
une unité de stockage de BIOS (51) qui est agencée pour stocker un programme de système d'entrée-sortie de base, BIOS ;
une unité de stockage d'informations de gestion (52) qui est agencée pour stocker des informations de gestion dans lesquelles chacun(e) d'une fonction de BIOS, d'une date d'expiration de la fonction de BIOS, et d'un état de la fonction de BIOS, sont mutuellement associé(e)s ;
une unité de modification de BIOS (104) qui est agencée pour stocker, dans l'unité de stockage de BIOS (51), des informations de BIOS reçues en provenance d'un appareil serveur afin de mettre en œuvre la fonction de BIOS en fonction d'une demande d'un client de manière à activer la fonction de BIOS, et pour stocker des informations de gestion dans l'unité de stockage d'informations de gestion (52) ; et
une unité de gestion de BIOS (105) qui est agencée pour, lorsqu'une date acquise à partir d'une unité d'horloge a dépassé la date d'expiration stockée dans l'unité de stockage d'informations de gestion (52), désactiver la fonction de BIOS correspondant à la date d'expiration, et modifier l'état de la fonction de BIOS correspondant à la fonction de BIOS désactivée dans les informations de gestion, en un état non valide,
dans lequel, lorsque la date de l'unité d'horloge est modifiée en raison d'une perte d'alimentation d'une batterie, ou lorsqu'une heure de l'unité d'horloge est modifiée sur plus de 24 heures par le système d'exploitation, OS, l'unité de gestion de BIOS (105) est en outre agencée pour désactiver la fonction de BIOS, et modifier, en l'état non valide, l'état de la fonction de BIOS correspondant à la fonction de BIOS désactivée dans les informations de gestion, et
dans lequel, lorsqu'il y a une modification de moins de 24 heures de l'heure de l'unité d'horloge par le système d'exploitation, l'unité de gestion de BIOS (105) est en outre agencée pour compter la modification, et lorsque le nombre de comptages de modification est égal à des temps de seuil ou plus au cours d'une période prédéterminée passée, l'unité de gestion de BIOS (105) est en outre agencée pour désactiver la fonction de BIOS, et modifier, en l'état non valide, l'état de la fonction de BIOS correspondant à la fonction de BIOS désactivée dans les informations de gestion.

2. Appareil de traitement d'informations selon la revendication 1,
dans lequel l'unité de modification de BIOS (104) est agencée pour acquérir, conjointement avec les informations de BIOS, des données d'authentification générées sur la base des informations de BIOS et des données de clé secrète correspondant à l'appareil de traitement d'informations (100) et reçues en provenance de l'appareil serveur, déterminer la validité des informations de BIOS sur la base de données de clé publique correspondant aux données de clé secrète et aux données d'authentification, et lorsque les informations de BIOS sont valides, stocker les informations de BIOS dans l'unité de stockage de BIOS (51) afin d'activer la fonction de BIOS.

3. Appareil de traitement d'informations (100) selon la revendication 1 ou 2, dans lequel
les informations de BIOS comprennent des informations d'identification d'appareil permettant d'identifier l'appareil de traitement d'informations (100) et des données de clé d'activation permettant d'activer la fonction de BIOS, et
lorsque les informations d'identification d'appareil incluses dans les informations de BIOS correspondent aux informations d'identification d'appareil de l'appareil de traitement d'informations (100), et lorsque les données de clé d'activation transmises au client d'une manière différente de celle des informations de BIOS, et saisies par le client, correspondent aux données de clé d'activation incluses dans les informations de BIOS, l'unité de modification de BIOS (104) est en outre agencée pour stocker les informations de BIOS dans l'unité de stockage de BIOS (51) afin d'activer la fonction de BIOS.

4. Appareil de traitement d'informations (100) selon l'une quelconque des revendications 1 à 3, dans lequel l'unité de gestion de BIOS (105) est en outre agencée pour déterminer si la date acquise à partir de l'unité d'horloge a dépassé la date d'expiration stockée dans l'unité de stockage d'informations de gestion (52) à chaque démarrage de l'appareil de traitement d'informations (100), et lorsque la date a dépassé la date d'expiration, l'unité de gestion de BIOS (105) est en outre agencée pour désactiver la fonction de BIOS correspondant à la date d'expiration et modifier, en l'état non valide, l'état de la fonction de BIOS correspondant à la fonction de BIOS désactivée dans les informations de gestion.

5. Appareil de traitement d'informations (100) selon l'une quelconque des revendications 1 à 4, dans lequel l'unité de gestion de BIOS (105) est en outre agencée pour déterminer si la date acquise à partir de l'unité d'horloge a dépassé ou non la date d'expiration stockée dans l'unité de stockage d'informations de gestion (52), régulièrement, dans un état tel qu'un système d'exploitation (OS) est en cours d'exécution, et lorsque la date a dépassé la date d'expiration, l'unité de gestion de BIOS (105) est en outre agencée pour désactiver la fonction de BIOS correspondant à la date d'expiration, et modifier, en l'état non valide, l'état de la fonction de BIOS correspondant à la fonction de BIOS désactivée dans les informations de gestion lors du prochain démarrage de l'appareil de traitement d'informations (100).

6. Appareil de traitement d'informations (100) selon l'une quelconque des revendications 1 à 5, dans lequel, lorsqu'il existe une fonction de BIOS dont la date d'expiration est valide dans l'unité de stockage d'informations de gestion (52), l'unité de gestion de BIOS (105) est en outre agencée pour interdire toute modification de la date de l'unité d'horloge par un menu de configuration de BIOS.

7. Appareil de traitement d'informations (100) selon l'une quelconque des revendications 1 à 6, dans lequel, lors de la mise à jour de la date d'expiration, l'unité de modification de BIOS (104) est en outre agencée pour acquérir des informations de mise à jour afin de mettre à jour la date d'expiration correspondant à la fonction de BIOS, et sur la base des informations de mise à jour, pour activer la fonction de BIOS et mettre à jour la date d'expiration correspondant à la fonction de BIOS dans l'unité de stockage d'informations de gestion (52).

8. Appareil de traitement d'informations (100) selon l'une quelconque des revendications 1 à 7, dans lequel l'unité de modification de BIOS (104) et l'unité de gestion de BIOS (105) sont configurées dans le cadre d'un BIOS.

9. Procédé de gestion de BIOS d'un appareil de traitement d'informations (100) comprenant une unité de stockage de BIOS (51), qui est agencée pour stocker un programme de système d'entrée-sortie de base, BIOS, et une unité de stockage d'informations de gestion (52) qui est agencée pour stocker des informations de gestion dans lesquelles chacun(e) d'une fonction de BIOS, d'une date d'expiration de la fonction de BIOS, et d'un état de la fonction de BIOS, sont mutuellement associé(e)s, le procédé de gestion de BIOS comprenant :
une étape consistant à amener une unité de modification de BIOS (104) à stocker, dans l'unité de stockage de BIOS (51), des informations de BIOS reçues en provenance d'un appareil serveur afin de mettre en œuvre une fonction de BIOS en fonction d'une demande d'un client de manière à activer la fonction de BIOS, et à stocker des informations de gestion dans l'unité de stockage d'informations de gestion (52) ; et
une étape consistant à amener une unité de gestion de BIOS (105) à désactiver la fonction de BIOS correspondant à une date d'expiration lorsqu'une date acquise à partir d'une unité d'horloge a dépassé la date d'expiration stockée dans l'unité de stockage d'informations de gestion (52), et à modifier l'état de la fonction de BIOS correspondant à la fonction de BIOS désactivée dans les informations de gestion, en un état non valide,
dans lequel, lorsque la date de l'unité d'horloge est modifiée en raison d'une perte d'alimentation d'une batterie, ou lorsque l'heure de l'unité d'horloge est modifiée sur plus de 24 heures par le système d'exploitation, OS, le procédé comprend une étape consistant à désactiver la fonction de BIOS et à modifier, en l'état non valide, l'état de la fonction de BIOS correspondant à la fonction de BIOS désactivée dans les informations de gestion, et
dans lequel, lorsqu'il y a une modification de moins de 24 heures de l'heure de l'unité d'horloge par l'OS, le procédé comprend une étape consistant à compter la modification, et lorsque le nombre de comptages de modification est égal à des temps de seuil ou plus au cours d'une période prédéterminée passée, le procédé comprend une étape consistant à désactiver la fonction de BIOS, et à modifier, en l'état non valide, l'état de la fonction de BIOS correspondant à la fonction de BIOS désactivée dans les informations de gestion.
